Europäisches Patentamt

European Patent Office

Office européen des brevets

(11) Numéro de publication: **0 271 411**
**A2**

(12) **DEMANDE DE BREVET EUROPEEN**

(21) Numéro de dépôt: 87402787.3

(22) Date de dépôt: 08.12.87

(51) Int. Cl.⁴: **G 02 F 3/00**
**G 02 F 1/05**

(30) Priorité: 09.12.86 FR 8617208

(43) Date de publication de la demande:
15.06.88 Bulletin 88/24

(84) Etats contractants désignés: **DE GB IT NL SE**

(71) Demandeur: **THOMSON-CSF**
**173, Boulevard Haussmann**
**F-75379 Paris Cédex 08 (FR)**

(72) Inventeur: **Huignard, Jean-Pierre**
**THOMSON-CSF SCPI 19, avenue de Messine**
**F-75008 Paris (FR)**

**Herriau, Jean-Pierre**
**THOMSON-CSF SCPI 19, avenue de Messine**
**F-75008 Paris (FR)**

(74) Mandataire: **Turlèque, Clotilde et al**
**THOMSON-CSF SCPI 19, avenue de Messine**
**F-75008 Paris (FR)**

(54) Dispositif bistable optique à cristal photoréfractif.

(57) Dispositif bistable à cristal photoréactif dans lequel un cristal photoréactif (1) compris entre deux miroirs (2 et 3) est éclaire uniformément par un faisceau lumineux (FE). Un faisceau signal (FS) est focalisé sur une portion déterminée du cristal (1) et effectue la commutation bistable de cette portion à l'intérieur du cristal.

FIG_3

EP 0 271 411 A2

**Description**

DISPOSITIF BISTABLE OPTIQUE A CRISTAL PHOTOREFRACTIF

L'invention concerne un dispositif bistable optique utilisant un cristal photoréactif et basé sur les variations d'indices induites dans ce cristal photoréactif. L'invention est également applicable à une matrice de bistables permettant d'effectuer en parallèle des fonctions logiques entre faisceaux optiques.

Un élément bistable optique se caractérise par l'existence de deux états stables de l'intensité transmise correspondant à une même valeur de l'intensité incidente. Un bistable optique est généralement constitué par un milieu non linéaire placé à l'intérieur d'une cavité résonante Fabry-Pérot. En faisant varier l'intensité du faisceau signal incident, on modifie l'indice du milieu non linéaire et par conséquent on désaccorde la cavité résonante. Dans ces conditions, on peut obtenir deux valeurs stables de l'intensité transmise (ou réfléchie) ainsi qu'une caractéristique non linéaire de l'intensité transmise en fonction de l'intensité incidente. On obtient ainsi une fonction analogue à celle du transistor électronique et qui peut être désignée sous la forme de transistor optique. On trouve la description d'un tel dispositif dans l'article "Premiers pas du transistor optique" de Patricia PINEAU publié dans la revue "La Recherche" numéro 114 de septembre 1980.

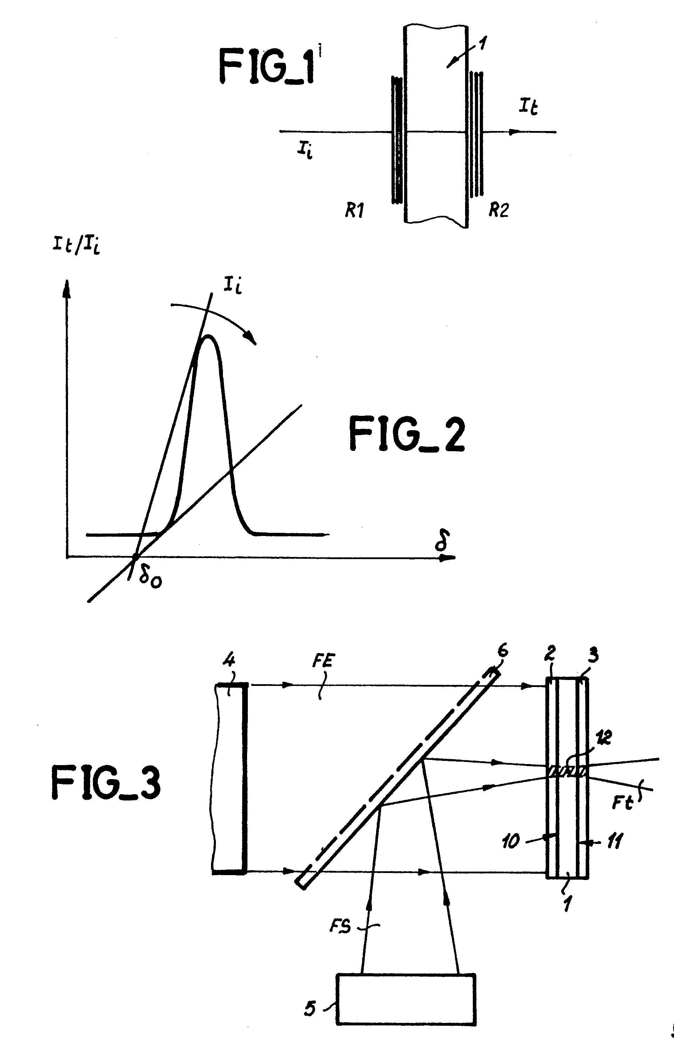

La figure 1 représente de façon simplifiée un tel dispositif et comporte un milieu non linéaire encadré de dispositifs de réflexion R1 et R2. Ce dispositif reçoit une onde d'intensité Iiet transmet une onde d'intensité It.

De tels dispositifs ont déjà été montrés en laboratoire en utilisant le milieux non linéaires suivants :
-effet Kerr optique dans les liquides
- résonance excitonique dans les semi-conducteurs super-réseaux
- absorption saturée dans les gaz.

Il est maintenant bien connu que les points de fonctionnement d'un dispositif sont obtenus par intersection de la courbe de résonance de la cavité Fabry-Pérot avec une droite tournant autour d'un point fixe et dont la pente est fonction de l'intensité incidente (Figure 2). Suivant la position du point de fonctionnement, un cycle d'hystérésis ou une caractéristique non linéaire, peuvent être obtenus entre l'intensité transmise et l'intensité incidente.

L'invention concerne un type de bistable reposant sur les variations d'indices induites par effet photoréactif dans les cristaux électro-optiques.

L'invention concerne donc un dispositif bistable à cristal photoréactif caractérisé en ce qu'il comporte :
- un cristal photoréactif comportant une première et une deuxième face ;
- un premier miroir accolé à la première face ;
- un deuxième miroir accolé à la deuxième face ;
- une première source lumineuse déterminée éclairant uniformément la première face à travers le premier miroir ;
- au moins une deuxième source lumineuse qui émet un faisceau signal de commande d'intensité déterminée, éclairant également la première face à travers le premier miroir et focalisé sur une portion déterminée du cristal photoréactif pour effectuer la commutation bistable de cette portion de cristal photoréactif.

Les différents objets et caractéristiques de l'invention apparaîtront plus clairement dans la description qui va suivre faite à titre d'exemple en se reportant aux figures annexées qui représentent :
- la figure 1, un dispositif de l'art connu ;
- la figure 2, des courbes de fonctionnement du dispositif de la figure 1,
- la figure 3, une exemple de réalisation du dispositif optique bistable selon l'invention ;
- la figure 4, un schéma explicatif du dispositif de la figure 3 ;
- les figures 5 à 7, des courbes illustrant le fonctionnement du dispositif selon l'invention ;
- la figure 8, une matrice de bistables optiques selon l'invention ;
- la figure 9, un dispositif selon l'invention incorporant la matrice de la figure 8,

Le changement d'indice induit par effet photoréactif trouve son origine dans la création d'un champ de charge d'espace sous illumination locale du cristal électro-optique. Les photoporteurs générés sous illumination sont repiégés après transport dans le volume du cristal et la champ créé par ce déplacement de charges module d'indice du cristal par effet électro-optique linéaire. Cet effet est mis en évidence dans tous les matériaux électro-optiques ($LiNbO_3$, $BaTiO_3$, BSO, GaAs...). L'amplitude de l'effet ainsi que la constante de temps dépendent des propriétés intrinsèques de chaque cristal (par exemple, coefficient électro-optique, densité de pièges...). Des énergies d'inscription très faibles sont actuellement utilisées avec les cristaux photoconducteurs GaAs, InP, BGO... (Energie d'inscription d'un réseau élémentaire très peu différent de 50 à 100 $\mu J.cm^{-2}$; $\lambda = 1,3$ $\mu m$ pour GaAs - $\lambda = 0,514$ $\mu m$ pour BSO). Par rapport aux milieux non linéaires déjà mentionnés, les effets photoréactifs se caractérisent par les propriétés suivantes :
- Mémorisation dans le noir de la variation d'indice photoinduite ;
- Constante de temps d'établissement de la variation d'indice contrôlée par l'intensité incidente sur le cristal relativement faible ;
- Variation d'indice dynamique photoinduite proportionelle aux taux de modulation de l'intensité reçue (pour tout autre milieu non linéaire n est proportionnel à l'intensité).

Le dispositif de l'invention tire profit de ces avantages en prévoyant, un dispositif bistable tel que est représenté en figure 3.

Ce dispositif comporte un cristal photoréactif 1 de forme plane. A l'une des faces 10 de ce cristal est accolé un premier miroir diélectrique 2 et à la face opposée 11 est accolé un deuxième miroir diélectrique 3. Ces miroirs peuvent être constituée par des couches d'un matériau diélectrique déposées sur les faces 10 et 11. Le coefficient de réflexion de ces miroirs est élevé. de l'ordre de 0,95. L'ensemble cristal photoréactif 1 et miroirs 2 et 3 constitue un dispositif Fabry-Pérot à vitesse élevée.

Une source lumineuse 4 émet un faisceau d'éclairement FE d'intensité Io et éclaire de façon uniforme, à travers un miroir semi-réfléchissant 6, le miroir 2 qui est suffisamment fin pour laisser passer la totalité du faisceau FE dans le cristal photoréactif 1. Le faisceau FE peut être cohérent ou incohérent et n'induit pas de changement d'indice par effet electro-optique.

Une autre source lumineuse 5 émet un faisceau signal de commande FS d'intensité $dI_i$ vers le miroir semi-réfléchissant 6 qui le réfléchit vers le cristal photoréactif.

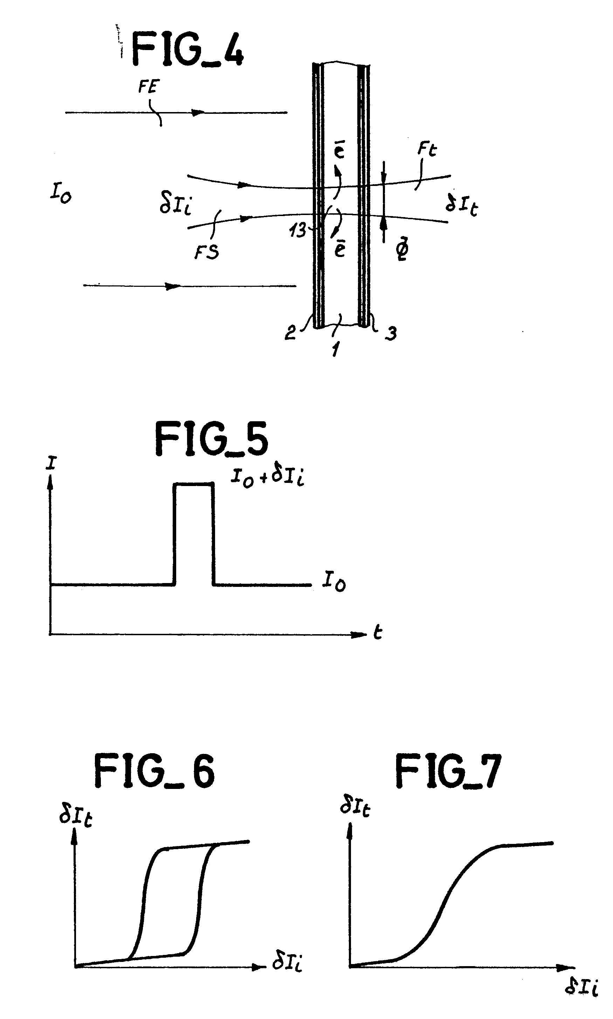

On obtient ainsi une combinaison des faisceaux FE et FS comme représenté en figure 4.

Soit $d\varphi$ le déphasage de l'onde signal après traversée de l'étalon Fabry-Pérot. On a les relations suivantes :

$$dI_t = dI_i \frac{1}{1 + \frac{4R}{(1 + R)^2} \, Sin^2 d\varphi} \qquad (1)$$

$$dn = dn_o - C \frac{dI_t}{I_o} \qquad (2)$$

La relation (2) traduit la variation d'indice induite par effet photoréactif sous l'action de l'intensité locale $I_o + dI_i$. La constante de proportionnalité C dépend des propriétés du cristal utilisé, et en particulier de la variation d'indice maximum que l'on peut photoinduire dans le matériau électro-optique.

Dans ces relations on a =
- $dI_t$ = intensité de l'onde lumineuse (faisceau Ft) à la sortie du cristal photoréactif 1.
- R = coefficient de réflexion des miroirs 2 et 3.
- $dn_o$ = indice de réfraction du cristal photoréactif lorsqu'il est seulement éclaire par le faisceau FE et en l'absence du faisceau signal de commande FS.

Si le faisceau lumineux FE éclaire en permanence le cristal photoréactif 1 et que le faisceau signal de commande est transmis sous forme d'impulsions, on a le diagramme de la figure 5.

Les points de fonctionnement du dispositif sont obtenus par solution graphique à partir des relations 1 et 2 et un exemple de cycle d'hystérésis entre l'intensité transmise et l'intensité incidente est donné sur les figures 6 et 7.

A titre d'exemple de réalisation on réalise le dispositif de l'invention à l'aide d'une plaquette d'arséniure de gallium muni de miroirs diélectriques à coefficient de réflexion élevé (R ≈ 0,95) et d'épaisseur d = 500 µm. La variation d'indice que l'on peut induire à saturation par effet photoréactif est de l'ordre de $\Delta n_{sat} \approx 5 \times 10^{-5}$.

Pour le point de fonctionnement indiqué sur la figure 2, on obtiendra une commutation du cycle d'hystérésis, si le déphasage induit sous l'action du faisceau signal $dI_i$ vaut :
$d\varphi_{FP} \approx \pi(1-R)$
avec $d\varphi_{FP}$ = déphasage Fabry-Pérot et R = coefficient de réflexion des miroirs ;
soit $d\varphi_{FP} \approx \frac{\pi}{20}$
Le déphasage correspondant à la variation d'indice induite par effet photoréactif s'écrit :
$d\varphi_{PR} = \frac{2\pi}{\lambda} \times d \times \Delta n_{sat}$
avec d = épaisseur de la plaquette de cristal photoréactif ;
$\Delta n_{sat}$ = variation d'indice que l'on peut induire à saturation ;
soit avec les valeurs numériques adoptées :
$\lambda \approx 1\mu m$ ; 500 µm ; $\Delta n_{sat} \approx 5 \times 10^{-5}$
$\delta\varphi_{PR} \approx \frac{\pi}{20}$
Le déphasage induit par effet photoréactif est donc suffisant pour commuter le Fabry-Pérot entre deux états de transmission haut et bas.

Les temps de commutation de la variation d'indice photoinduite correspondant aux constantes de temps de relaxation diélectrique du cristal photoréactif sous illumination incidente.

$$\tau \approx \frac{\varepsilon_r \varepsilon_o}{\sigma_{(I)}}$$

avec $\varepsilon_o$ = permittivité diélectrique du vide
$\varepsilon_r$ = permittivité diélectrique du cristal

3

Pour de l'arsénuire de gallium (GaAS), la loi de variation de la conductivité est donnée par
$$\sigma\ (I) = 10^{-8} + 5 \times 10^{-8}\ I.\Omega^{-1}\ cm^{-1}$$
I étant expriméen $W.cm^2$.

Les temps de commutation du dispositif bistable correspondant à un faisceau signal de commande d'intensité $dI_i$ trèe peu différent de 1 mW et focalisé sur un point de diamètre 3 um vaut :

$$\tau \approx \frac{\varepsilon_o\ \varepsilon_r}{(\ dI_i)}$$

pour des valeurs numériques de
$\varepsilon_r \approx 46$
$dI_i \approx 10^4\ W.cm^{-2}$

On a un temps de commutation t de valeur =
$t \approx 2.10^{-9}$ seconde.

Le dispositif de l'invention est applicable à un réseau de bistables.

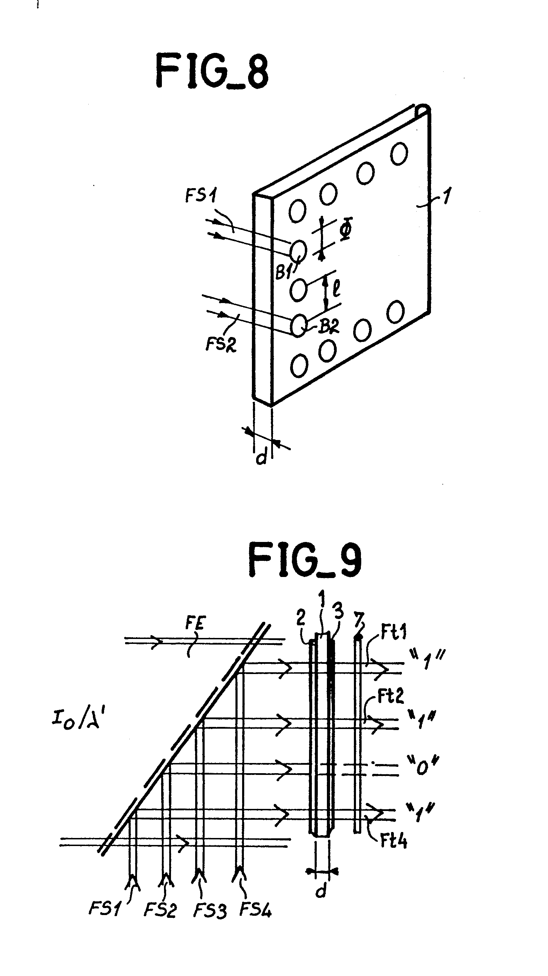

Comme représenté en figure 8 la lame de cristal photoréactif 1 peut être de dimensions tells qu'elle puisse recevoir distinctement plusieurs faisceaux signal de commande tels que FS1 et FS2. Chaque faisceau signal de commande détermine une zone (B1, B2) correspondant chacune à un bistable.

La lame de cristal photoréactif 1 peut être utilisée dans un montage similaire à celui de la figure 3.

On retrouve sur la figure 9 la lame en matériau photoréactif 1 encadrée des miroirs 2 et 3, le miroir semi-réfléchissant 6, le faisceau d'éclairement FE émis par une source lumineuse 4 et éclairant uniformément avec une intensité $I_o$ la lame 1. Par contre au lieu de n'avoit qu'une seule source émettant un faisceau signal de commande FS, on a plusieurs sources et plusieurs faisceaux tels que FS1 à FS4. Ces faisceaux peuvent être disposés sous forme matricielle pour commander une matrice de bistables telle que représentée en figure 8. Pour les raisons de facilités de représentation on a considéré sur la figure 9, des faisceaux FS1 à FS4 alignés donnant lieu à des faisceaux Ft1 à Ft4.

Selon ce qui résulte des explications qui prédède si l'intensité d'un faisceau quelconque, F3 par exemple est inférieurs à un seuil déterminé, le bistable (B3) correspondant du cristal photoréactif 1 est en position O et aucun signal lumineux (ou signal "O") n'est émis. Les autres faisceaux signaux (FS1, FS2, FS4) par contre donnent lieu à la mise en position 1 des bistables (B1, B2, B4) correspondants et des faisceaux Ft1, Ft2, Ft4 (signaux "1) sont émis.

Un réseau de 32 bistables sur 32 bistables basé sur l'effet photoréactif en arséniure de gallium peut être réalisé. Un tel réseau peut avoir les caractéristiques suivantes :
- dimension entre points $1 \approx 100\ \mu m$
- diamètre de chaque point $d\emptyset = 3\ \mu m$
- épaisseur $d \approx 500\ \mu m$
- coefficient de réflexion des miroirs diélectriques $R \approx 0,95$.

Si un faisceau signal a pour intensité $dI_i \simeq 1$ mW à une longueur d'onde de $\lambda = 1,3$ um (laser semi-conducteur) et si le faisceau d'éclairage uniforme (cohérent ou incohérent) du cristal photoréactif a pour intensité :
$I_o \approx 1\ W.cm-2$
le temps de commutation du bistable sera sensiblement de $t = 2 \times 10^{-9}$s.

Le dispositif proposé constitue un réseau de bistables à deux dimensions commandé par un faisceau de faible intensité ($\delta\ I_i \approx 1$ mW pour chaque point) et dont le temps de commutation est de l'ordre de quelques nanosecondes. Les applications de ce dispositif concernent tout particulièrement la calcul optique digital parallèle.

Les avantages présentés par ce dispositif sont les suivants :
- Matériau massif ne comportant pas de structure super-réseaux.
- Interaction non résonante donctionnant dans un large domaine de longueur d'onde.
- Temps de commutation de quelques nanosecondes pour un faisceau signal de 1 mW.

Il est bien évident que la description qui précède n'a été donnée qu'à titre d'exemple. Les valeurs numériques notamment n'ont été fournies que pour illustrer la description. D'autres variantes peuvent être envisagées dans sortir pour autant du cadre de l'invention.

**Revendications**

1. Dispositif bistable optique à cristal photoréactif caractérisé en ce qu'il comporte :
- un cristal photoréactif (1) comportant une première et une deuxième faces (10 et 11) ;
- un premier miroir (2) accolé à la première face (10) ;
- un deuxième miroir (3) accolé à la deuxième face (11) ;
- une première source lumineuse (4) qui émet un faisceau lumineux d'éclairement (FE) d'intensité

déterminée ($I_o$) éclairement uniformément la première face (10) à travers le premier miroir (2) ;

- au moins une deuxième source lumineuse (5) qui émet un faisceau signal de commande (FS) d'intensité ($dI_I$) déterminé, éclairement également la première face (10) à travers le premier miroir (2) et focalisé sur une portion déterminée (12) du cristal photoréactif (1), pour effectuer la commutation bistable de cette portion (12) de cristal photoréactif.

2. Dispositif bistable optique à cristal photoréactif selon la revendication 1, caractérisé en ce qu'il comporte un miroir semi-transparent (6) recevant distinctement le faisceau d'éclairement (FE) et le faisceau signal de commande (FS) et les combinant pour les transmettre à la première face (10) du cristal photoréactif (1) à travers le premier miroir (2).

3. Dispositif bistable optique selon la revendication 1, caractérisé en ce que lesdits premier et deuxième miroirs (2 et 3) sont des miroirs diélectriques dont le coefficient de réflexion est élevé.

4. Dispositif bistable optique selon la revendication 3, caractérisé en ce que ledit coefficient de réflexion est voisin de 0.95.

5. Dispositif bistable optique selon la revendication 1, caractérisé en ce que l'intensité ($I_o$) dudit faisceau lumineux d'éclairement est très faible comparée à l'intensité du faisceau

0271411

FIG_1

$I_t$

$I_i$

R1    R2

$I_t/I_i$

$I_i$

FIG_2

$\delta$

$\delta_0$

FIG_3

4    FE    6    2    3

12

Ft

10    11

1

FS

5

# FIG_4

FE

$I_0$

$\delta I_i$

FS

$\bar{e}$

13

$\bar{e}$

Ft

$\delta I_t$

$\phi$

2    1    3

# FIG_5

$I$

$I_0 + \delta I_i$

$I_0$

$t$

# FIG_6

$\delta I_t$

$\delta I_i$

# FIG_7

$\delta I_t$

$\delta I_i$

# FIG_8

# FIG_9